# EUROPÄISCHE PATENTSCHRIFT

(11) **EP 0 958 566 B1**
(45) Veröffentlichungstag und Bekanntmachung des Hinweises auf die Patenterteilung: **16.06.2004**
(21) Anmeldenummer: 98910621.6
(22) Anmeldetag: 04.02.1998
(51) Int. Cl.: G08G 1/09

(54) **VERFAHREN ZUR ÜBERMITTLUNG VON VERKEHRSINFORMATIONEN UND VORRICHTUNGEN ZUM DURCHFÜHREN DES VERFAHRENS**
METHOD FOR TRANSMITTING TRAFFIC INFORMATION AND DEVICES FOR IMPLEMENTING SAID METHOD
PROCEDE DE TRANSMISSION D'INFORMATIONS RELATIVES AU TRAFIC ET DISPOSITIFS POUR LA MISE EN OEUVRE DE CE PROCEDE

(30) Priorität: 04.02.1997 DE 19706046
(43) Veröffentlichungstag der Anmeldung: 24.11.1999
(73) Patentinhaber: ATX Europe GmbH, 40547 Düsseldorf (DE)
(72) Erfinder: HEIMANN, Josef, D-40629 Düsseldorf (DE); SCHULZ, Werner, D-40670 Meerbusch (DE); VIEWEG, Stefan, D-40547 Düsseldorf (DE)
(74) Vertreter: Meissner, Peter E., Dipl.-Ing.
(86) Internationale Anmeldenummer: PCT/DE1998/000396
(87) Internationale Veröffentlichungsnummer: WO 1998/034210

(56) Entgegenhaltungen:
- DE-C- 4 445 582
- US-A- 5 438 687

## Beschreibung

Die Erfindung betrifft ein Verfahren zur Übermittlung von Verkehrsinformationen sowie Vorrichtungen zur Durchführung des Verfahrens.

Grundsätzlich können von einer Verkehrsinformationszentrale Verkehrsinformationen, welche den aktuellen oder künftigen Zustand eines Verkehrsnetzes oder Verkehrsnetzteiles repräsentieren, von einer Verkehrsinformationszentrale an mindestens ein Endgerät eines Verkehrsinformations-Kunden per Radio, Mobilfunk etc. überrmittelt werden. VerKehrsinformationen werden hierfür aus unterschiedlichen Quellen, wie beispielsweise stationären Detektoren; FCD (im Verkehr mitschwimmende Fahrzeuge), Verkehrsmeldungen etc. erhalten und von einer Verkehrsinformationszentrale an Endgeräte weltergesendet. Die einer Verkehrsinformationszentrale zur Verfügung stehende Verkehrsinformationsmenge kann jedoch sehr groß sein. Deshalb werden von Verkehrsinformationszentralen in Form von lokalen Radiosendem z. B. nur das Stadtgebiet oder Umland dieses Radiosenders aktuell betreffende Verkehrsinformationen zusammengestellt und an Endgeräte übermittelt. Die zu übermittelnde und im Endgerät darzustellende Verkehrsinformationsmenge ist jedoch dennoch sehr groß.

Die DE-A-44 45 582 offenbart ein Verfahren zur Übertragung von Verkehrsinformationen von einer Zentrale an ein Endgerät über einen RDS-Radiokanal, wobei im Endgerät empfangene Verkehrsinformationen dort hinsichtlich ihrer Relevanz für ein den aktuellen Endgerätort umgebendes Gebiet gefiltert werden.

Aufgabe der Erfindung ist eine optimierte Verkehrsinformation eines Verkehrsinformationsnutzers durch sein Endgerät mit möglichst vielen relevanten und möglichst wenig irrelevariten Verkehrsinformationen. Die Aufgabe wird durch die Gegenstände der unabhängigen Ansprüche gelöst. Die erfindungsgemäße Zusammenstellung von Verkehrsinformationen hinsichtlich ihrer Relevanz für mindestens zwei Zeitpunkte optimiert die Redundanz. So werden für den ersten der mindestens zwei Zeitpunkte nur Verkehrsinformationen zusammengestellt, die für den aktuellen Aufenthaltsort und ggf. ein vorgebbares Bezugsgebiet um den aktuellen

Aufenthaltsort eines Fahrzeuges relevant sein können, während die anderen Verkehrsinformationen als irrelevant für den aktuellen Zeitpunkt ausselektiert und nicht mit zusammengestellt werden. Entsprechend werden für den zweiten (entsprechend auch dritten usw.) relativ zum ersten Zeitpunkt späteren Zeitpunkt aufgrund eines zu erwartenden Aufenthaltsortes des Endgerätes zu diesem zweiten Zeitpunkt in einem zugehörigen zweiten Bezugsgebiet Verkehrsinformationen als relevant zusammengestellt, welche für den zweiten Zeitpunkt für das Endgerät aufgrund seines dann zu erwartenden Aufenthaltsgebiets (= Bezugsgebiet) relevant sind, während Verkehrsinformationen nicht in die Zusammenstellung aufgenommen werden, also als irrelevant ausselektiert werden, welche zum zweiten Zeitpunkt für das Endgerät aufgrund seines dann zu erwartenden Aufenthaltsgebietes (oder Bezugsgebietes) nicht relevant sind.

Hierdurch wird der Umfang der übertragenen bzw. zu übertragenden Verkehrsinformationen reduziert. Wenn die für den ersten, zweiten und evtl. weiteren Zeitpunkt aufgrund des jeweils zugehörigen Bezugsgebietes (= Aufenthaltsgebiet) relevanten Verkehrsinformationen in der Verkehrsinformationszentrale zusammengestellt werden, verringert sich die zu übermittelnde Verkehrsinformationsmenge, so daß die Übermittlung kostengünstiger wird. Überdies wird die Erstellung von Navigationsinformationen aufgrund einer verringerten Datenbasis vereinfacht.

Die Erfindung kann in unterschiedlicher Weise ausgestaltet sein. Wenn der erste Zeitpunkt ein künftiger Zeitpunkt ist, werden lediglich prognostizierte Verkehrsinformationen übermittelt, während dann, wenn der erste Zeitpunkt der aktuelle Zeitpunkt ist, aktuelle und prognostizierte Verkehrsinformationen übermittelt werden.

Anstatt lediglich zwei Zeitpunkte und/oder Bezugsgebiete betreffende Verkehrsinformationen können auch drei oder mehr Zeitpunkte und/oder Bezugsgebiete betreffende Verkehrsinformationen übermittelt werden, um die Redundanz weiter zu optimieren.

Die Übermittlung kann insbesondere als Mobilfunkkurznachricht an ein Endgerät oder an mehrere Endgeräte erfolgen.

Die Bezugsgebiete können in unterschiedlicher Weise bestimmt werden. Ein aktuelles Bezugsgebiet kann insbesondere aufgrund der aktuellen Position des Endgerätes bestimmt werden, welche vom Endgerät durch eine darin integrierte oder daran anschließbare Ortserfassungseinrichtung (insbesondere GPS) erfaßt werden kann. Künftige Bezugsgebiete können aufgrund einer Prognose möglicher oder wahrscheinlicher Aufenthaltsorte eines Fahrzeuges mit dem Endgerät bestimmt werden. Dabei kann eine bestimmte Geschwindigkeit oder Geschwindigkeitsspanne eines Fahrzeuges angenommen werden oder mehrere Geschwindigkeiten bzw. Geschwindigkeitsspannen mit unterschiedlichen Wahrscheinlichkeiten angenommen werden. Wenn keine bevorzugte Richtung des Fahrzeuges bekannt ist, sich das Fahrzeug also näherungsweise in jede Richtung bewegen kann, können die Bezugsgebiete um den aktuellen Ort des Fahrzeuges kreisförmig oder ringförmig angeordnet sein. Eventuell kann die zu erwartende Fahrtrichtung und/oder aktuelle Fahrtrichtung des Fahrzeuges berücksichtigt werden, so daß sich Bezugsgebiete in Form von Kreissegmenten oder bogenförmigen Ringabschnitten ergeben. Das erste, zweite und weitere Bezugsgebiete können sich teilweise überlappen (insbesondere bei Bezugsgebieten in Form von Vollkreisen oder Kreissegmenten) oder disjunkt sein (beispielsweise bei Bezugsgebieten in Form von Ringen oder bogenförmigen Ringsegmenten).

Die Definition der Bezugsgebiete kann vorgebbar sein. Auch kann eine bestimmte mittlere Geschwindigkeit eines Fahrzeuges, evtl. differenziert nach Straßentypen, angenommen werden und für vorgebbare Zeitintervalle daraus jeweils ein zu erwartendes Bezugsgebiet für eine bestimmte in der Zukunft liegende Zeitspanne berechnet werden. Damit können sich insbesondere zwei Intervalle in Abständen von 10 bis 60 Minuten, insbesondere von 30 Minuten ergeben, wobei jeweils ein Zeitintervall eine innere und/oder äußere Grenze eines Bezugsgebietes definierten kann.

Hinsichtlich der Übermittlung von Verkehrsinformationen von einer Verkehrsinformationszentrale an mindestens ein Endgerät bei Verwendung eines zellularen Funknetzes können Verkehrsinformationen insbesondere nach durch jeweils eine oder mehrere Funkzellen definierten Bezugsgebieten individualisiert übermittelt werden. Dann erhalten die Fahrzeuge einer bestimmten Funkzelle oder einer bestimmten Gruppe von Funkzellen innerhalb dieser Funkzelle die gleichen zusammengestellten Verkehrsinformationen; dies ist zweckmäßig, da vereinfachend für alle Fahrzeuge in einer Funkzelle oder Funkzellengruppe angenommen werden kann, daß sie in der Zukunft übereinstimmende Bezugsgebiete für künftige Zeitpunkte haben.

Das im Fahrzeüg installierte Endgerät weist zweckmäßig eine Empfangseinrichtung in Form eines Mobiltelefons auf. Wird die Information aktiv vom Nutzer bei der Verkehrsinformationszentrale abgefragt, so wird für das Zusammenstellen der Informationen die Position des Nutzers benötigt. Diese kann z.B. mit Hilfe einer Ortungsvorrichtung oder einer Eingabevorrichtung im Endgerät erfaßt und an die Verkehrsinformationszentrale übermittelt werden. Ferner ist es möglich, beispielsweise aufgrund der in einem Mobilfunknetz zur Verfügung stehenden Informationen über diejenige Funkzelle/Basisstation, mit welcher das Mobilfunknetz aktuell kommuniziert, den Ort des Mobiltelefons und damit Endgerätes zu bestimmen.

Das Endgerät kann insbesondere ferner ein Navigationsprogramm zum Navigieren unter Berücksichtigung übermittelter Verkehrsinformationen aufweisen, wobei die Übermittlung von zusammengestellten, selektierten Verkehrsinformationen die Navigation vereinfacht. Das Navigationsprogramm kann insbesondere ein eigenes Routenplanungsprogramm umfassen, welches in Abhängigkeit vom aktuellen Ort und einem zu erfragenden Zielort eine Route unter Berücksichtigung übermittelter Verkehrsinformationen entwickeln und ggf. laufend anpassen kann. Vorteilhaft ist es ferner, wenn im Endgerät eine Kartendatei zum Verkehrsnetz, insbesondere eine über ein CD-ROM-Laufwerk einlesbare Kartendatei zur Verfügung steht. Die Ausgabe im Endgerät kann insbesondere akustisch und/oder optisch an einen Benutzer erfolgen, wofür eine Ausgabeeinrichtung integriert sein kann und/oder am Endgerät ein Anschluß für eine Ausgabeeinrichtung vorgesehen sein kann.

Die Verkehrszentrale zur Durchführung des Verfahrens umfasst ein Programm zur Durchführung des Verfahrens. Als Sendeeinrichtung ist eine Mobilfunkeinrichtung oder ein Anschluß an eine Mobilfunkeinrichtung vorteilhaft.

Weitere Merkmale und Vorteile ergeben sich aus den Unteransprüchen und der nachfolgenden Beschreibung eines Ausführungsbeispiels anhand der Zeichnung. Dabei zeigt:
- Fig. 1: disjunkte, den aktuellen Aufenthaltsort eines Fahrzeuges umgebende Bezugsgebiete,
- Fig. 2: sich teilweise überlappende Bezugsgebiete,
- Fig. 3: die Draufsicht auf die Bezugsgebiete in Fig. 1
- Fig. 4: Bezugsgebiete in Form von bogenförmigen Ringabschnitten konzentrischer Ringe,
- Fig. 5: einem wabenförmig vereinfachten, zellularen Mobilfunknetz zugeordnete, um den aktuellen Aufenthaltsort eines Fahrzeuges konzentrische Bezugsgebiete,
- Fig. 6: den Datenfluß für zu bestimmten Zeitintervallen und dadurch definierten Bezugsgebieten zusammengestellte Verkehrsinformationen,
- Fig. 7: einen Ausschnitt eines Verkehrsnetzes um den aktuellen Ort eines Endgerätes und diesen aktuellen Ort umgebende Bezusgebiete,
- Fig. 8: den Ausschnitt eines Verkehrsnetzes gemäß Fig. 7 mit zu Orten in Bezugsgebieten jeweils als relevant zusammengestellten Verkehrsinformationen

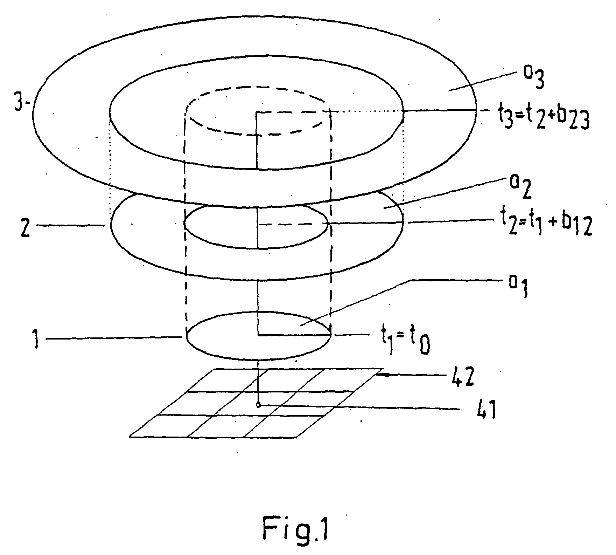

Figur 1 verdeutlicht die Festlegung von Bezugsgebieten um den aktuellen, bekannten Aufenthaltsort eines Fahrzeuges mit einem erfindungsgemäßen Endgerät. Ein Fahrzeug 41 mit einem Endgerät befindet sich an einem bekannten, an der Position 41 dargestellten Aufenthaltsort in einem durch einen Ausschnitt aus einer Karte 42 angedeuteten Verkehrsnetz. Der Aufenthaltsort des Endgerätes kann beispielsweise durch GPS ermittelt werden. Dem Benutzer des Endgerätes, also beispielsweise einem Autofahrer, sollen lediglich für ihn relevante Informationen übermittelt und/oder dargestellt werden. Verkehrsinformationen zu einem Bezugsgebiet, das das Fahrzeug 41 aufgrund seiner angenommenen mittleren Geschwindigkeit vₘ in absehbarer Zeit nicht erreicht, sind für den Benutzer des Endgerätes wenig oder überhaupt nicht relevant. Verkehrsinformationen in der unmittelbaren Umgebung des aktuellen Aufenthaltsortes des Fahrzeuges sind hingegen für den Endgerät-Nutzer relevant. Ferner sind für den Endgerät-Benutzer Verkehrsinformationen relevant, die Verkehrszustands-Prognosen zu Bezugsgebieten betreffen, in weichen sich das Auto mit dem Endgerät des Benutzers zu einem Zeitpunkt bzw in einer Zeitspanne aufhält, auf welchen bzw. welche sich die Verkehrsinformations-Prognose zum jeweiligen Bezugsgebiet bezieht.

Aufgrund der angenommenen mittleren Geschwindigkeit bzw. Geschwindigkeitsspanne vₘ des Fahrzeuges 41 (evtl. differenziert nach verschiedenen Straßentypen) kann vereinfachend bestimmt werden, wo sich zu einem bestimmten Zeitpunkt oder in einer bestimmten Zeitspanne in der Zukunft das Fahrzeug aufhalten könnte, so daß für dieses den zu erwartenden Aufenthaltsort repräsentierende Bezugsgebiet Verkehrsinformationen als für den Benutzer des Endgerätes im Fahrzeug relevant selektierte Verkehrsinformationen zusammengestellt und/oder von einer Verkehrszentrale an das Fahrzeug übermittelt und/oder im Fahrzeug-Endgerät dargestellt werden können.

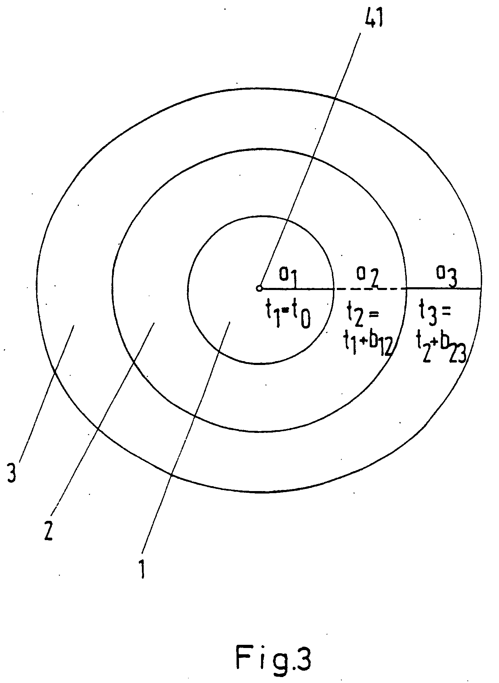

Da sich das Fahrzeug 41 mit einer Geschwindigkeit vₘ fortbewegt, kann es innerhalb einer Zeitspanne b₁₂ um einen Weg a₁ = vₘ x b₁₂ fortbewegen, was in diesem einfachen Falle eine Grenze eines Bezugsgebietes definiert. Das Fahrzeug 41 bewegt sich also in Fig. 1 (bzw. in Fig. 3 in der Draufsicht) vom Aufenthaltsgebiet 1 (bzw. hier dessen Mittelpunkt) innerhalb der Zeitspanne b₁₂ zum inneren Rand des ringförmigen Bezugsgebietes 2. Entsprechend bewegt sich das Fahrzeug innerhalb der Zeitspanne b₂₃ vom inneren Rand des Bezugsgebietes 2 zum äußeren Rand des Bezugsgebietes 3. Somit befindet sich das Fahrzeug zu einem ersten in der Zukunft liegenden Zeitpunkt t₁ gerade noch im Inneren des Bezugsgebietes 1 (hier am äußeren Rand des Bezugsgebietes 1), zum Zeitpunkt t₂ innerhalb des Bezugsgebietes 2 (an dessen äußerem Rand) und zum Zeitpunkt t₃ innerhalb des Bezugsgebietes 3.
Im dargestellten vereinfachten Fall sind die Bezugsgebiete aneinandergrenzende, nicht überlappende (also disjunkte) Kreisringe mit Ausnahme des inneren Bezugsgebietes, welches einen Kreis darstellt. Bezugsgebiete können jedoch auch beliebige anderen Formen aufweisen.

Im dargestellten Fall kann das Modell als Zwiebelschalenmodell beschrieben werden.

Die Bezugsgebiete 1, 2, 3 entsprechen jeweils einer Zeitspanne, innerhalb welcher zu erwarten ist, daß sich das Fahrzeug bei einer bestimmten Fahrzeuggeschwindigkeit innerhalb jeweils eines Bezugsgebietes befindet. Die Größe der Zeitspanne (= Zeitscheiben) der Bezugsgebiete kann vorgebbar sein und insbesondere 15 bis 30 Minuten, vorzugsweise 30 Minuten, betragen. Dabei kann die mittlere angenommene Geschwindigkeit eines Fahrzeuges entweder fest oder in Abhängigkeit von zu durchfahrenden Straßentypen unterschiedlich vorgegeben werden. Die mittlere Geschwindigkeit kann insbesondere einen Wert von 50 bis 100 km aufweisen, so daß sich bei einer Zeitscheibe von 30 Minuten als Radius eine Ringdicke von 25 km (bei 50 km/h) bzw. 50 km (bei 100 km/h) ergibt. Bei unterschiedlicher Wahl von Geschwindigkeiten in Abhängigkeit vom Straßentyp kann beispielsweise 30 km pro Stunde für Innenstädte, 50 km/h für Landstraßen und 100 km/h für Autobahnen gerechnet werden, insbesondere jeweils Luftlinien-Geschwindigkeiten, also Geschwindigkeiten bezogen auf Punkte auf einer Karte.

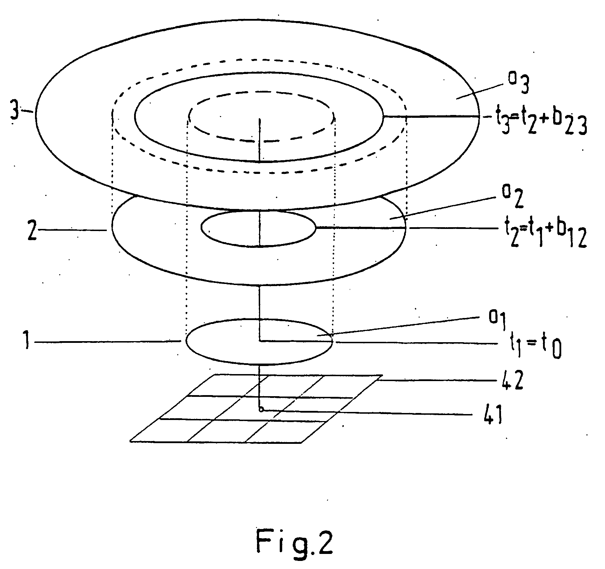

Aufgrund von Ungenauigkeiten, insbesondere bei gewählten mittleren Geschwindigkeiten, kann es auch zweckmäßig sein, wie in Fig. 2 dargestellt, die einzelnen Bezugsgebiete zu überlappen. Im Überlappungsbereich von sich überlappenden Bezugsgebieten kann das Endgerät Verkehrsinformationen zu allen den aktuellen und/oder künftigen Endgerät-Ort umfassenden Bezugsgebieten erhalten. In Fig. 2 ist der innere Rand des Bezugsgebietes 2 innerhalb des äußeren Randes des Bezugsgebietes 1, während der äußere Rand des Bezugsgebietes 2 innerhalb des Bezugsgebietes 3 liegt.

Wenn der Zielort einer Fahrt zumindest näherungweise bekannt ist, was insbesondere bei Navigationssystemen mit Zielort-Abfrage der Fall ist, kann die relevante Verkehrsinformations-Menge weiter eingeschränkt werden.

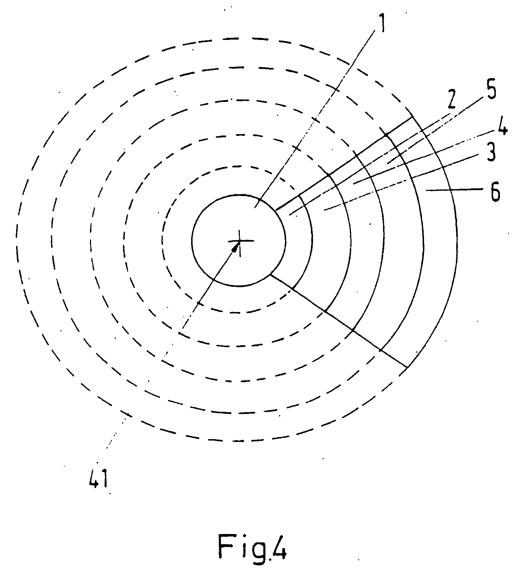

Gemäß Fig. 4 kann bei nur näherungsweise bekanntem Zielort oder Zielrichtung einer geplanten Endgeräts-Route im Verkehrsnetz eine Einschränkung von Bezugsgebieten auf Kreissegmente bzw. Ringsegmente erfolgen. In Fig. 4 sind somit die Bezugsgebiete (welche jeweils für eine bestimmte Zeitspanne in der Zukunft einen angenommenen Aufenthaltsbereich eines Fahrzeuges mit einem Endgerät angeben) Ringsegmente mit Ausnahme des Bezugsgebietes 1, welches kreisförmig ist. Neben Ringsegmenten sind auch Kreissegmente möglich. Die Bezugsgebiete können sich auch bei näherungsweise bekanntem Zielort oder Fahrtrichtung überlappen.

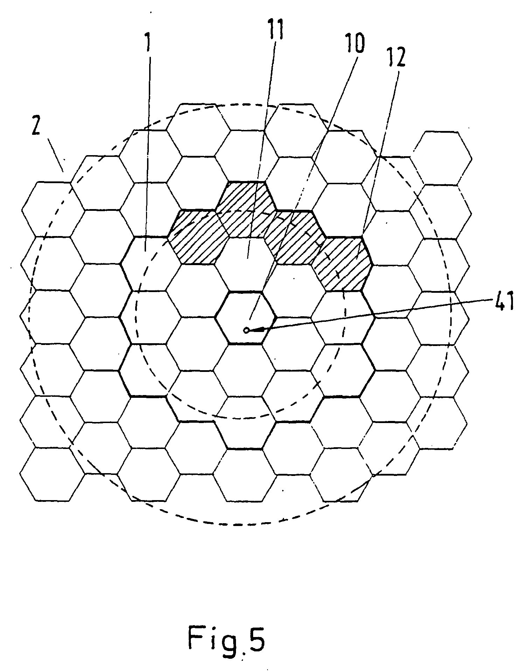

Fig. 5 zeigt ein zellulares, hier vereinfachend wabenförmig dargestelltes Funknetz. Das dargestellte Funknetz ist ein Mobilfunknetz. Ein Fahrzeug befindet sich aktuell innerhalb der Zelle 10 des Funknetzes. Das Bezugsgebiet 1 für das Fahrzeug in der Zelle 10 wird durch den gestrichelten Kreis 1, das Bezugsgebiet 2 durch den gestrichelten Kreis 2 dargestellt. Bei grobmaschigen Mobilfunknetzen kann ein Bezugsgebiet auch nur eine Funkzelle enthalten. Im dargestellten Fall enthält das Bezugsgebiet 1 auch weitere Funkzellen, wie beispielsweise die Funkzellen 11 und 12. Dabei liegen im vorliegenden Beispiel einige Funkzellen, wie die Funkzelle 12, sowohl im Bezugsgebiet 1 als auch im Bezugsgebiet 2. Hierdurch wird es möglich, beispielsweise die Zellen innerhalb der dicken Linie, welche 12 einschließt, entweder nur einem Bezugsgebiet (also nur dem Bezugsgebiet 1 oder nur dem Bezugsgebiet 2) oder beiden zuzuordnen.

Im vorliegenden Fall werden beispielsweise für aile Fahrzeuge innerhalb der Funkzelle 10 identische Verkehrsinformationen zusammengestellt; diese können insbesondere als Cellbroad-Cast-Nachricht, von einer Verkehrszentrale an die Endgeräte innerhalb der Funkzelle 10 übermittelt werden. Dabei werden aktuelle Verkehrsinformationen aus dem Gebiet 1 und für eine künftige Zeitspanne relevante Prognose-Verkehrsinformationen für das hier ringförmige, das Bezugsgebiet 1 umgebende Bezugsgebiet 2 zusammengestellt.

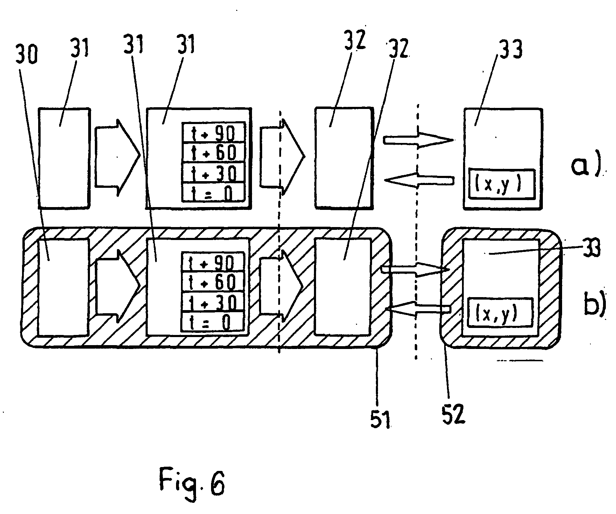

Fig. 6 verdeutlicht den Fluß zusammengestellter Verkehrsinformationen.

Dabei werden in Fig. 6a im Schritt 30 aktuelle Verkehrsinformationen aus Meßdaten von stationären Detektoren und/oder mobilen Detektoren und/oder anderen Quellen von einer Verkehrszentrale gesammelt. Im Schritt 31 werden mit Hilfe von Modellen und/oder Erfahrungsdatenbanken und/oder weiteren Annahmen in einer Verarbeitungseinheit 31 aktuelle Verkehrsdaten zur aktuellen Verkehrssituation und prognostizierte Verkehrsdaten zu einer Verkehrssituation zu einem in der Zukunft liegenden Zeitpunkt ermittelt. Dabei entsteht ein sehr großes Verkehrsinformations-Datenvolumen. Nun sollen relevante Informationen herausgefiltert werden und an den Benutzer übertragen und/oder dargestellt werden. Im Schritt 32 werden deshalb für einen Benutzer aufgrund seines aktuellen Bezugsgebietes (= seines aktuellen Aufeinhaltsortes und einer definierten Umgebung darum) und aufgrund jeweils für die Zukunft prognostizierter Bezugsgebiete (= prognostizierte Aufenthaltsbereiche für zukünftige Zeitpunkte oder Zeitspannen) relevante Verkehrsinformationen zusammengestellt, übermittelt und im Endgerät dem Benutzer dargestellt.

Hierfür ist der Ort des Endgerätes von Bedeutung. Der Ort des Endgerätes (des Fahrzeuges, in dem sich das Endgerät befindet) kann beispielsweise aufgrund der Funkzelle, in welcher sich das Fahrzeug befindet, bekannt sein. Alternativ oder zusätzlich kann er beispielsweise mit GPS oder einem anderen Ortserfassungssystem ermittelt werden. Der Ort wird der Zentrale entweder von einer Basisstation in der Funkzelle oder insbesondere bei einem GPS-Ortserfassungssystem oder dergleichen per Mobilfunk vom Endgerät an die Zentrale übertragen. Insbesondere im letzten Falle können Informationen auch individuell für ein Fahrzeug zusammengestellt werden.

Gemäß Fig. 6b werden Informationen in der Zentrale 51 zusammengestellt, so daß sich der "Relevanzfilter" in der Zentrale befindet. Dabei werden nur relevante Informationen zusammengestellt und übertragen.

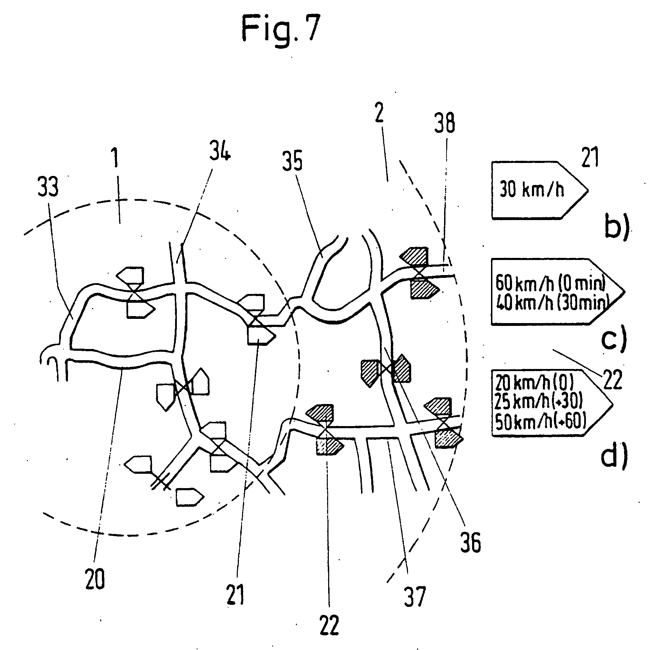

Fig. 7 zeigt ein Endgeräts-Display mit einer Darstellung eines Ausschnittes eines Verkehrsnetzes mit Straßen 33, 34, 35, 36, 37, 38 und anderen Straßen sowie Bezugsgebiete 1, 2, jeweils innerhalb gestrichelt dargestellter Kreislinien sowie vorhandene Datensätze zu Orten, an welchen die Datensätze 20, 21 usw dargestellt sind. Zum Bezugsgebiet 1 werden die Datensätze, welche sich auf Orte innerhalb des Bezugsgebietes 1 beziehen, übertragen und dargestellt, während zum Bezugsgebiet 2 Datensätze (wie der Datensatz 22), welche sich auf Gebiete oder Orte innerhalb des Bezugsgebietes 2 beziehen, übertragen und dargestellt werden.

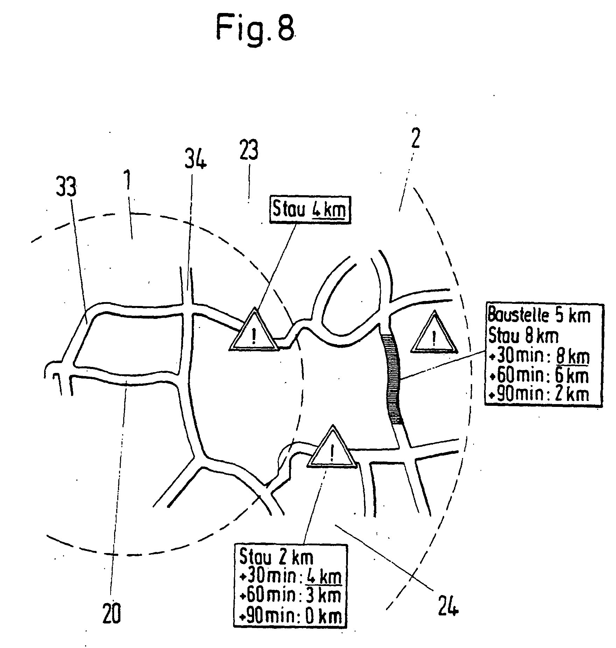

Fig. 8 zeigt eine Ansicht eines Displays eines Endgerätes, welches einen Ausschnitt aus einem Verkehrsnetz in Form von Straßen 33, 34 usw. sowie Meldungen über Störungen darstellt. Die Störungen werden dabei auf einer Straße durch Symbole in Form jeweils eines Dreiecks mit einem darin befindlichen Ausrufezeichen am Ort der Störung dargestellt. Die Art einer Störung und Daten hierzu können beispielsweise durch Anklicken oder Anwählen mit einem Finger etc. angefordert und auf dem Display dargestellt werden.

Ferner verdeutlicht sich aus Fig. 8, daß für das Bezugsgebiet 1 andere Meldungen als für das Bezugsgebiet 2 dargestellt werden. So werden für das Bezugsgebiet 1 nur hierin relevante und für das Bezugsgebiet 2 nur im letzteren relevante Verkehrsinformationen dargestellt.

## Patentansprüche

1. Verfahren zur Übermittlung von Verkehrsinformationen von einer Verkehrsinformationszentrale an mindestens ein Endgerät in einem Fahrzeug über einen Kommunikationskanal,
wobei ein erstes Bezugsgebiet am oder um den bekannten oder vermuteten Aufenthaltsort mindestens eines zu informierenden Fahrzeuges zu einem ersten Zeitpunkt definiert wird,
wobei mindestens ein zweites Bezugsgebiet an einem oder um mindestens einen vermuteten Aufenthaltsort des Fahrzeuges zu einem gegenüber dem ersten Zeitpunkt in der Zukunft liegenden zweiten Zeitpunkt definiert wird,
wobei jeweils für ein Bezugsgebiet und einen zugehörigen zweiten und evt. weiteren künftigen Zeitpunkt mit einer Prognose generierte Verkehrsinformationen und für den jetzigen Zeitpunkt und das zugehörige aktuelle Bezugsgebiet bestimmte Verkehrsinförmationen zur Verringerung der zu üermittelnden Informationen in der Verkehrszentrale zusammengestellt werden,
wobei diese Verkehrsinformationen jeweils mit den Zeitpunkt, auf den sie sich beziehen und/oder das Bezugsgebiet, auf das sie sich beziehen, repräsentierenden Daten übermittelt werden.

2. Verfahren nach Anspruch 1,
**dadurch gekennzeichnet,**
**daß** auch der erste Zeitpunkt ein künftiger Zeitpunkt ist.

3. Verfahren nach Anspruch 1,
**dadurch gekennzeichnet,**
**daß** der erste Zeitpunkt der aktuelle Zeitpunkt ist und daß für ihn aktuelle Verkehrsinformationen berücksichtigt werden.

4. Verfahren nach einem der vorhergehenden Ansprüche,
**dadurch gekennzeichnet,**
**daß** die eine Übermittlung von mindestens zwei Bezugsgebiete betreffenden Verkehrsinformationen jeweils an ein Endgerät mit einem Empfänger in einem Fahrzeug erfolgt.

5. Verfahren nach einem der vorhergehenden Ansprüche,
**dadurch gekennzeichnet,**
**daß** mehr als zwei Zeitpunkte betreffende Verkehrsinformationen und/oder mehr als zwei Bezugsgebiete betreffende Verkehrsinformationen übermittelt werden.

6. Verfahren nach einem der vorhergehenden Ansprüche,
**dadurch gekennzeichnet,**
**daß** die Übermittlung von einer Verkehrszentrale an ein Endgerät in einem Fahrzeug per Mobilfunk, insbesondere als Kurznachricht und/oder als Cellbroadcast-Nachricht. insbesondere GSM-SMS, erfolgt.

7. Verfahren nach einem der vorhergehenden Ansprüche,
**dadurch gekennzeichnet,**
**daß** der erste Zeitpunkt dem Zeitpunkt der Übermittlung der Verkehrsinformationen so naheliegt, daß die Verkehrsinformationen für das erste Bezugsgebiet somit näherungsweise die aktuellen Verkehrsinformationen darstellen.

8. Verfahren nach einem der vorhergehenden Ansprüche,
**dadurch gekennzeichnet,**
**daß** der erste Zeitpunkt absolut oder relativ zum aktuellen Zeitpunkt vorgebbar ist, und daß die Verkehrsinformationen für das erste Bezugsgebiet die für den ersten Zeitpunkt prognostizierte Verkehrssituation beschreiben.

9. Verfahren nach einem der vorhergehenden Ansprüche,
**dadurch gekennzeichnet,**
**daß** die Prognose für das zweite Bezugsgebiet mindestens einen Zeitpunkt in oder nach einem Zeitraum betrifft, in dem ein Fahrzeug mit durchschnittlicher Geschwindigkeit bei einer Fahrt von dem ersten Bezugsgebiet in das zweite Bezugsgebiet dieses zweite Bezugsgebiet erreichen würde.

10. Verfahren nach Anspruch 9,
**dadurch gekennzeichnet,**
**daß** bei der Bestimmung der durchschnittlichen Geschwindigkeit nur eine Auswahl der insgesamt im Straßennetz verfügbaren Straßentypen berücksichtigt wird.

11. Verfahren nach einem der vorhergehenden Ansprüche,
**dadurch gekennzeichnet,**
**daß** das zweite Bezugsgebiet das erste Bezugsgebiet im wesentlichen in Form eines konzentrischen Kreises in der Draufsicht umschließt.

12. Verfahren nach einem der vorhergehenden Ansprüche,
**dadurch gekennzeichnet,**
**daß** das zweite Bezugsgebiet einen Ausschnitt oder ein Segment eines das erste Bezugsgebiet im wesentlichen konzentrisch umschließenden oder umfassenden Gebietes darstellt.

13. , Verfahren nach einem der vorhergehenden Ansprüche,
**dadurch gekennzeichnet,**
**daß** Verkehrsinformationen zu weiteren Bezugsgebieten bereitgestellt bzw. übertragen werden, die in Bezug auf das erste Bezugsgebiet unterschiedliche räumliche Abstände haben, und daß diese Verkehrsinformationen zumindest einen dem jeweiligen räumlichen Abstand entsprechenden Prognosezeitraum umfassen.

14. Verfahren nach einem der vorhergehenden Ansprüche,
**dadurch gekennzeichnet,**
**daß** die weiteren Bezugsgebiete das erste Bezugsgebiet im wesentlichen als konzentrische Flächen, insbesondere Kreisflächen, umschließen oder Ausschnitte aus solchen Flächen darstellen.

15. Verfahren nach einem der vorhergehenden Ansprüche,
**dadurch gekennzeichnet,**
**daß** die Bezugsgebiete sich teilweise überlappen.

16. Verfahren nach einem der vorhergehenden Ansprüche,
**dadurch gekennzeichnet,**
**daß** die Verkehrsinformationen die Verkehrssituation zu vorgegebenen Zeitpunkten beschreiben, die einen Abstand von jeweils 10 bis 60 Minuten, vorzugsweise 30 Minuten, zueinander haben, wobei die übertragenen Verkehrsinformationen vorgegebene Zeitpunkte in einem absoluten Zeitraster oder relativ zum ersten Zeitpunkt angeben.

17. Verfahren nach einem der vorhergehenden Ansprüche,
**dadurch gekennzeichnet,**
**daß** die Verkehrsinformationen über ein Funknetz an den Empfänger übermittelt werden.

18. Verfahren nach Anspruch 17,
**dadurch gekennzeichnet,**
**daß** Verkehrsinformationen über dieses Funknetz nach Bezugsgebieten individualisiert von mindestens einer Zentrale an mindestens ein Endgerät übermittelt werden und daß aktuelle Verkehrsinformationen das aktuelle Bezugsgebiet des Endgerätes und Prognosen mindestens ein räumlich benachbartes Bezugsgebiet betreffen.

19. Verfahren nach einem der vorhergehenden Ansprüche,
**dadurch gekennzeichnet,**
**daß** die Verkehrsinformationen über ein zellulares Funknetz übermittelt werden und daß die Verkehrsinformationen nach jeweils durch eine oder mehrere Funkzellen definierten Bezugsgebieten individualisiert übermittelt werden, wobei in einer Funkzelle vorzugsweise Verkehrsinformationen aus benachbarten Funkzellen von einem sie empfangenden Endgerät entsprechend ihrem Abstand zum Endgerät als aktuelle Vekehrsinformation oder als Prognose berücksichtigt werden.

20. Verfahren nach einem der vorhergehenden Ansprüche,
**dadurch gekennzeichnet,**
**daß** die Verkehrsinformationen auf individuelle Anfrage von einem räumlich in einer Funkzelle befindlichen Endgerät an dieses Endgerät über diese Funkzelle oder im Broadcast-Verfahren an alle Empfänger in dieser Funkzelle übermittelt werden.

21. Verfahren nach einem der vorhergehenden Ansprüche,
**dadurch gekennzeichnet,**
**daß** die Verkehrsinformationen für eine Vielzahl von Bezugsgebieten, insbesondere einen Großraum oder ein ganzes Land, ganz oder teilweise identisch bereitgestellt werden,
und **daß** diese Informationen sowohl aktuelle als auch prognostizierte Verkehrsinformationen zu vorgegebenen zukünftigen Zeitpunkten umfassen, und
**daß** diese Verkehrsinformationen über einen broadcastfähiges Funknetz, insbesondere ein digitales Rundfunknetz übertragen werden.

22. Verfahren nach Anspruch 21,
**dadurch gekennzeichnet,**
**daß** die Bestimmung des tatsächlichen oder angenommenen ersten Bezugsgebietes durch ein Endgerät automatisch anhand der aktuellen Endgerät-Position erfolgt oder zur manuellen Eingabe abgefragt wird und
**daß** für dieses erste Bezugsgebiet die aktuellen Verkehrsinformationen ausgewertet werden.

23. Verfahren nach einem der vorhergehenden Ansprüche,
**dadurch gekennzeichnet,**
**daß** die übermittelten Verkehrsinformationen insbesondere auch gemessene oder berechnete durchschnittliche Geschwindigkeiten und/oder Reisezeiten für vorgegebene und/oder vorgebbare Straßenabschnitte umfassen.

24. Verfahren nach einem der vorhergehenden Ansprüche,
**gekennzeichnet dadurch.**
**daß** aktuelle und prognostizierte durchschnittliche Geschwindigkeiten über ein Paging-Funknetz und/oder einen Kurzstreckenkommunikationskanal, insbesondere über Baken, an Empfänger an Endgeräten in Fahrzeugen übermittelt werden.

25. Verfahren nach einem der Anspürhce 1 bis 23,
**dadurch gekennzeichnet,**
**daß** der Kommunikationskanal ein privater Kommunikationskanal, insbesondere Mobilfunk ist.

26. Verkehrszentrale,
**dadurch gekennzeichnet,**
**daß** sie einen Relevanzfilter zur Durchführung des Verfahrens nach einem der Ansprüche 1 bis 25, eine Sendeeinrichtung oder einen Anschluß an eine Sendeeinrichtung zum Übermitteln von für den ersten, zweiten und evtl. weiteren Zeitpunkt aufgrund des jeweils zugehörigen Bezugsgebiets relevanten Verkehrsinformationen im Relevanzfilter der Zentrale zusammengestellten Verkehrsinförmationen aufweist.

27. Verkehrszentrale nach Anspruch 26,
**dadurch gekennzeichnet,**
**daß** sie als Sendeeinrichtung ein Mobiltelefon aufweist.

## Claims

1. Method for transmitting traffic information from a traffic information centre to at least one terminal in a vehicle via a communication channel,
wherein a first reference area at or around the known or assumed location at least of one vehicle to be informed is defined at a first time,
wherein at least one second reference area at one or around at least one assumed location of the vehicle is defined at a second time which is in the future relative to the first time,
wherein traffic information generated by a prediction for a reference area and an associated second and possibly further future time and traffic information determined for the present time and the associated current reference area are collated respectively in the traffic centre in order to reduce the information which is to be transmitted,
wherein this traffic information is transmitted respectively with data which represent the time to which they relate and/or the reference area to which they relate.

2. Method according to claim 1,
**characterised in that**
the first time is also a future time.

3. Method according to claim 1,
**characterised in that**
the first time is the current time and **in that** current traffic information is taken into account for it.

4. Method according to one of the preceding claims,
**characterised in that**
the traffic information relating to a transmission from at least two reference areas is effected respectively to a terminal with a receiver in a vehicle.

5. Method according to one of the preceding claims,
**characterised in that**
traffic information relating to more than two times and/or traffic information relating to more than two reference areas is transmitted.

6. Method according to one of the preceding claims,
**characterised in that**
the transmission is effected from a traffic centre to a terminal in a vehicle by mobile radio, in particular as a short message and/or as a cell broadcast message, in particular GSM-SMS.

7. Method according to one of the preceding claims,
**characterised in that**
the first time is so close to the time of the transmission of the traffic information that the traffic information for the first reference area thus represents approximately the current traffic information.

8. Method according to one of the preceding claims,
**characterised in that**
the first time can be prescribed absolutely or relative to the current time, and **in that** the traffic information for the first reference area describes the traffic situation predicted for the first time.

9. Method according to one of the preceding claims,
**characterised in that**
the prediction for the second reference area relates to at least one time in or after a period in which a vehicle at average speed would reach this second reference area in the case of a journey from the first reference area into the second reference area.

10. Method according to claim 9,
**characterised in that**,
during the determination of the average speed, only a selection of the types of roads which are available in total in the road network is taken into account.

11. Method according to one of the preceding claims,
**characterised in that**
the second reference area surrounds the first reference area substantially in the form of a concentric circle in plan view.

12. Method according to one of the preceding claims,
**characterised in that**
the second reference area represents a section or a segment of an area which surrounds or encircles the first reference area substantially concentrically.

13. Method according to one of the preceding claims,
**characterised in that**
traffic information relating to further reference areas is made available or broadcast, which areas have different spatial distances relative to the first reference area, and **in that** this traffic information includes at least one predicted period corresponding to the respective spatial distance.

14. Method according to one of the preceding claims,
**characterised in that**
the further reference areas surround the first reference area substantially as concentric areas, in particular circular areas, or represent sections of such areas.

15. Method according to one of the preceding claims,
**characterised in that**
the reference areas partially overlap.

16. Method according to one of the preceding claims,
**characterised in that**
the traffic information describes the traffic situation at prescribed times which have an interval relative to each other respectively of 10 to 60 minutes, preferably 30 minutes, the broadcast traffic information indicating prescribed times in an absolute time grid or relative to the first time.

17. Method according to one of the preceding claims,
**characterised in that**
the traffic information is transmitted to the receiver via a radio network.

18. Method according to claim 17,
**characterised in that**
the traffic information is transmitted via this radio network individualised according to reference areas from at least one centre to at least one terminal, and **in that** current traffic information relates to the current reference area of the terminal and predictions of at least one spatially adjacent reference area.

19. Method according to one of the preceding claims,
**characterised in that**
the traffic information is transmitted via a cellular radio network, and **in that** the traffic information is transmitted individualised according to reference areas which are defined respectively by one or more radio cells, preferably traffic information from adjacent radio cells being taken into account in one radio cell by a terminal receiving said information as current traffic information or as a prediction, corresponding to the distance of said radio cells relative to the terminal.

20. Method according to one of the preceding claims,
**characterised in that**
the traffic information, upon an individual query by a terminal which is spatially situated in a radio cell, is transmitted to this terminal via this radio cell or by the broadcast method to all receivers in this radio cell.

21. Method according to one of the preceding claims,
**characterised in that**
the traffic information for a multiplicity of reference areas, in particular for a conurbation or an entire state, is made available identically completely or partially,
and **in that** this information includes both current and predicted traffic information at prescribed future times, and
**in that** this traffic information is broadcast via a radio network which is capable of broadcasting, in particular a digital broadcasting network.

22. Method according to claim 21,
**characterised in that**
the determination of the actual or assumed first reference area is effected automatically by a terminal by means of the current terminal position or is queried by manual input, and
**in that** the current traffic information for this first reference area is evaluated.

23. Method according to one of the preceding claims,
**characterised in that**
the transmitted traffic information includes in particular also measured or calculated average speeds and/or travel times for prescribed and/or prescribable road sections.

24. Method according to one of the preceding claims,
**characterised in that**
current and predicted average speeds are transmitted via a paging radio network and/or via a short range communication channel, in particular via beacons, to receivers at terminals in vehicles.

25. Method according to one of the claims 1 to 23,
**characterised in that**
the communication channel is a private communication channel, in particular mobile radio.

26. Traffic centre,
**characterised in that**
it has a relevance filter for implementing the method according to one of the claims 1 to 25, a transmitting device or a connection to a transmitting device in order to transmit traffic information collated in the relevance filter of the centre for the first, second and possibly further time on the basis of the traffic information which is relevant to the respectively associated reference area.

27. Traffic centre according to claim 26,
**characterised in that**
it has a mobile telephone as transmitting device.

## Revendications

1. Procédé pour la transmission d'informations de circulation depuis une centrale d'informations de circulation vers au moins un terminal situé dans un véhicule par l'intermédiaire d'un canal de communication,
une première zone de référence étant définie à un premier instant sur ou autour du lieu de séjour connu ou supposé d'au moins un véhicule à informer,
au moins une deuxième zone de référence étant définie sur ou autour d'au moins un lieu de séjour supposé du véhicule à un deuxième instant situé dans le futur par rapport au premier instant,
des informations de circulation générées avec un pronostic à chaque fois pour une zone de référence ainsi que pour un deuxième instant correspondant et éventuellement d'autres instants futurs et des informations de circulation définies pour l'instant présent et la zone de référence actuelle correspondante étant réunies dans la centrale de circulation afin de réduire les informations à transmettre,
ces informations de circulation étant transmises à chaque fois avec des données représentant l'instant auquel elles se rapportent et/ou la zone de référence à laquelle elles se rapportent.

2. Procédé selon la revendication 1,
**caractérisé en ce que** le premier instant est aussi un instant situé dans le futur.

3. Procédé selon la revendication 1,
**caractérisé en ce que** le premier instant est l'instant actuel et **en ce que**, pour lui, des informations actuelles sont prises en considération.

4. Procédé selon l'une des revendications précédentes,
**caractérisé en ce qu'**une transmission d'informations de circulation concernant au moins deux zones de référence a lieu à chaque fois vers un terminal comportant un récepteur situé dans un véhicule.

5. Procédé selon l'une des revendications précédentes,
**caractérisé en ce que** des informations de circulation concernant plus de deux instants et/ou des informations de circulation concernant plus de deux zones de référence sont transmises.

6. Procédé selon l'une des revendications précédentes,
**caractérisé en ce que** la transmission depuis une centrale de circulation vers un terminal situé dans un véhicule a lieu par radiotéléphonie mobile, en particulier sous la forme de messages courts et/ou de messages de radiodiffusion cellulaire, notamment GSM-SMS.

7. Procédé selon l'une des revendications précédentes,
**caractérisé en ce que** le premier instant est proche de l'instant de la transmission des informations de circulation, de telle sorte que les informations de circulation représentent ainsi pratiquement les informations de circulation actuelles pour la première zone de référence.

8. Procédé selon l'une des revendications précédentes,
**caractérisé en ce que** le premier instant peut être donné de façon absolue ou de façon relative par rapport à l'instant actuel et **en ce que** les informations de circulation pour la première zone de référence décrivent la situation de circulation pronostiquée pour le premier instant.

9. Procédé selon l'une des revendications précédentes,
**caractérisé en ce que** le pronostic pour la deuxième zone de référence concerne au moins un instant à l'intérieur ou après un laps de temps au cours duquel un véhicule roulant à une vitesse moyenne atteindrait cette deuxième zone de référence, lors d'un trajet entre la première zone de référence et la deuxième zone de référence.

10. Procédé selon la revendication 9,
**caractérisé en ce que**, lors de la détermination de la vitesse moyenne, on ne tient compte que d'une sélection des types de routes globalement disponibles dans le réseau routier.

11. Procédé selon l'une des revendications précédentes,
**caractérisé en ce que** la deuxième zone de référence entoure la première zone de référence essentiellement, vue du dessus, sous la forme d'un cercle concentrique.

12. Procédé selon l'une des revendications précédentes,
**caractérisé en ce que** la deuxième zone de référence représente une section ou un segment d'une zone comprenant ou entourant essentiellement de manière concentrique la première zone de référence.

13. Procédé selon l'une des revendications précédentes,
**caractérisé en ce que** des informations de circulation sont transmises ou mises à disposition pour d'autres zones de référence, lesquelles présentent des distances géographiques diverses par rapport à la première zone de référence, et **en ce que** ces informations de circulation comportent au moins un laps de temps de pronostic correspondant à la distance géographique concernée.

14. Procédé selon l'une des revendications précédentes,
**caractérisé en ce que** les autres zones de référence entourent la première zone de référence essentiellement en tant que surfaces concentriques, en particulier en tant que surfaces circulaires, ou représentent des sections de telles surfaces.

15. Procédé selon l'une des revendications précédentes,
**caractérisé en ce que** les zones de référence se chevauchent en partie.

16. Procédé selon l'une des revendications précédentes,
**caractérisé en ce que** les informations de circulation décrivent la situation de circulation à des instants donnés, lesquels sont distants les uns des autres de 10 à 60 minutes, de préférence de 30 minutes, les informations de circulation transmises indiquant des instants donnés à l'intérieur d'une grille de temps absolue ou relativement au premier instant.

17. Procédé selon l'une des revendications précédentes,
**caractérisé en ce que** les informations de circulation sont transmises au récepteur par l'intermédiaire d'un réseau radio.

18. Procédé selon la revendication 17,
**caractérisé en ce que** les informations de circulation sont transmises par l'intermédiaire de ce réseau radio à au moins un terminal par au moins une centrale de façon individualisée en fonction des zones de référence et **en ce que** les informations de circulation actuelles concernent la zone de référence actuelle du terminal et les pronostics concernent au moins une zone de référence géographiquement voisine.

19. Procédé selon l'une des revendications précédentes,
**caractérisé en ce que** les informations de circulation sont transmises par l'intermédiaire d'un réseau radio cellulaire et **en ce que** les informations de circulation sont transmises de façon individualisée en fonction de zones de référence à chaque fois définies par une ou plusieurs cellules radio, **en ce que**, à l'intérieur d'une cellule radio, de préférence des informations de circulation provenant de cellules radio voisines sont prises en considération par un terminal les recevant en tant qu'informations actuelles ou pronostics, selon leur distance par rapport au terminal.

20. Procédé selon l'une des revendications précédentes,
**caractérisé en ce que** les informations de circulation sont transmises à la demande individuelle d'un terminal situé géographiquement à l'intérieur d'une cellule radio à ce même terminal par l'intermédiaire de cette cellule radio ou, suivant le procédé de radiodiffusion, à tous les récepteurs situés dans cette cellule radio.

21. Procédé selon l'une des revendications précédentes,
**caractérisé en ce que** les informations de circulation sont mises à disposition pour un grand nombre de zones de référence, en particulier pour une grande agglomération ou tout un pays, de façon entièrement ou partiellement identique, et **en ce que** ces informations comportent aussi bien des informations de circulation actuelles que des informations pronostiquées à des instants futurs donnés, et **en ce que** ces informations de circulation sont transmises par l'intermédiaire d'un réseau radio compatible avec la radiodiffusion, en particulier un réseau de radiodiffusion numérique.

22. Procédé selon la revendication 21,
**caractérisé en ce que** la détermination de la première zone de référence effective ou supposée a lieu par un terminal automatiquement à l'appui de la position actuelle du terminal ou est interrogée à des fins de saisie manuelle et **en ce que** les informations de circulation actuelles sont analysées pour cette première zone de référence.

23. Procédé selon l'une des revendications précédentes,
**caractérisé en ce que** les informations de circulation transmises comportent en particulier aussi des vitesses moyennes mesurées ou calculées et/ou des temps de trajet pour des portions de route données et/ou pouvant être données.

24. Procédé selon l'une des revendications précédentes,
**caractérisé en ce que** des vitesses moyennes actuelles et pronostiquées sont transmises par l'intermédiaire d'un réseau radio d'appel de personnes et/ou d'un canal de communication à faible portée, en particulier par l'intermédiaire de balises, à des récepteurs sur des terminaux situés dans des véhicules.

25. Procédé selon l'une des revendications 1 à 23,
**caractérisé en ce que** le canal de communication est un canal de communication privé, en particulier un radiotéléphone mobile.

26. Centrale de circulation,
**caractérisée en ce qu'**elle présente un filtre de pertinence pour l'exécution du procédé suivant l'une des revendications 1 à 25, un dispositif d'émission ou un branchement à un dispositif d'émission pour la transmission d'informations de circulation pertinentes pour le premier, deuxième et éventuellement les autres instants en fonction de la zone de référence correspondante concernée et réunies dans le filtre de pertinence de la centrale.

27. Centrale de circulation selon la revendication 26,
**caractérisée en ce qu'**elle présente un radiotéléphone mobile en tant que dispositif d'émission.
